Europäisches Patentamt

European Patent Office

Office européen des brevets

(11) Numéro de publication: **0 276 645**
**A1**

## (12) DEMANDE DE BREVET EUROPEEN

(21) Numéro de dépôt: **87870190.3**

(22) Date de dépôt: **21.12.87**

(51) Int. Cl.⁴: **A01K 5/00** , A01K 5/02

(30) Priorité: **23.12.86 BE 6048282**

(43) Date de publication de la demande:
**03.08.88 Bulletin  88/31**

(84) Etats contractants désignés:
**DE FR NL**

(71) Demandeur: **Ets JOSKIN S.A.**
**39, Rue de Wergifosse 39**
**B-4634 Soumagne(BE)**

(72) Inventeur: **Joskin, Victor**
**rue de Wergifosse 39**
**B-4634 Soumagne(BE)**

(74) Mandataire: **Dellicour, Paul**
**Office de Brevets E. Dellicour rue Fabry**
**18/012**
**B-4000 Liège(BE)**

(54) **Procédé de mélange et de distribution d'aliments pour le bétail et machine rotative destinée à réaliser le procédé.**

(57) Une machine mélangeuse-distributrice rotative, destinée à réaliser le procédé, consiste en une cuve (1) animée d'un mouvement de rotation autour d'un axe de révolution horizontal, pourvue d'un trou de chargement (2) dans son fond arrière, et en un dispositif transporteur (4) traversant le fond avant (3) de la cuve rendu hermétique par rapport à ladite cuve pour s'étendre dans une partie importante de celle-ci.

FIG.1A

FIG.1B

EP 0 276 645 A1

## Procédé de mélange et de distribution d'aliments pour le bétail et machine rotative destinée à réaliser le procédé.

La présente invention concerne un procédé pour le mélange et la distribution d'ensilages et tous autres aliments non liquides pour le bétail et est relative à une machine rotative destinée à la réalisation du procédé.

Le but de l'invention est de réaliser un procédé simple permettant d'obtenir un mélange bien homogéne et une distribution selon un rythme très régulier.

L'invention a aussi pour but de réaliser une machine mélangeuse-distributrice rotative, dont la conception est axée sur la simplicité du matériel destiné à sa réalisation et le peu de puissance réclamée pour son fonctionnement.

Le procédé suivant l'invention consiste à charger les aliments par l'arrière dans une machine rotative suivant son axe de révolution, à amener les aliments vers l'avant de la machine rotative, à ramener ceux-ci par un moyen de transport vers l'arrière de ladite machine pour recommencer le cycle jusqu'au mélange, et ensuite à inverser le sens de marche du moyen de transport pour décharger les aliments mélangés à l'avant de la machine.

Le procédé consiste encore à incliner la machine rotative vers l'avant pour l'opération de mélange et la remettre de niveau ou horizontale pour l'opération de distribution.

Une machine mélangeuse-distributrice rotative destinée à réaliser le procédé est caractérisée en ce qu'elle consiste en une cuve animée d'un mouvement de rotation autour d'un axe de révolution horizontal, pourvue d'un trou de chargement dans son fond arrière, et en un dispositif transporteur traversant le fond avant de la cuve rendu hermétique par rapport à ladite cuve pour s'étendre dans une partie importante de celle-ci.

Suivant une réalisation de l'invention le dispositif transporteur traverse le fond de la cuve par un trou centré par rapport à l'axe de révolution de ladite cuve.

Suivant une variante de réalisation le dispositif transporteur traverse le fond de la cuve par un trou décentré par rapport l'axe de révolution de ladite cuve et prévu dans un élément fixe monté de manière hermétique par rapport au fond de la cuve dans un trou centré par rapport à l'axe de révolution de ladite cuve.

Suivant l'invention le dispositif transporteur est un transporteur à vis ou un transporteur courroie, dont la partie saillant hors de la cuve est reliée à un moyen d'entraînement à inversion de sens de marche.

Encore suivant l'invention des moyens sont prévus sur la paroi interne de la cuve et conformés pour amener les aliments de l'arrière vers l'avant de la cuve et sur le dispositif transporteur.

Pour mieux faire comprendre l'invention celle-ci est décrite maintenant sur la base des dessins annexés, à titre d'exemples uniquement, montrant en :

Figure 1 (A et B) une vue en élévation de profil avec coupe partielle d'une machine mélangeuse-distributrice rotative suivant l'invention pendant l'opération de mélange ;

Figure 2 à échelle réduite une vue analogue à celle de la figure 1 dans une variante de réalisation ;

Figures 3 à 5 trois réalisations différentes du montage du dispositif transporteur dans le fond de la cuve, suivant la variante de la figure 2.

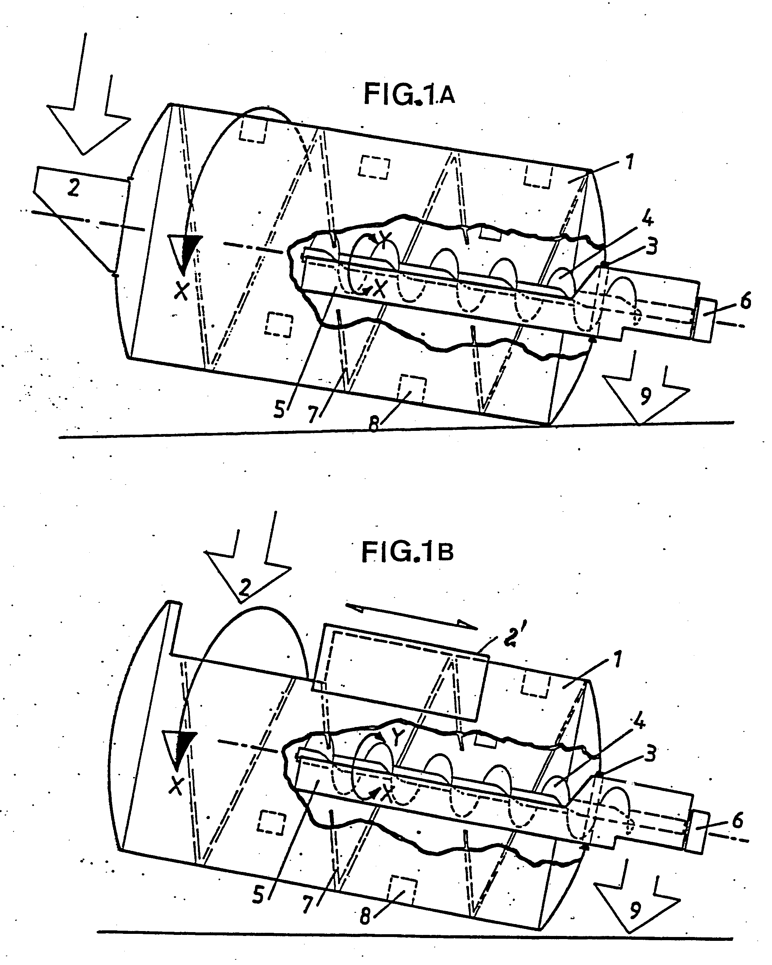

Comme on le voit en figure 1A, la machine consiste en une cuve 1 animée d'un mouvement de rotation autour d'un axe de révolution horizontal. La cuve 1 est pourvue dans son fond arrière d'une trémie ou ouverture 2 permettant le chargement par l'un ou l'autre moyen quelconque de manutention et dans son fond avant d'un trou 3 centré par rapport à l'axe de révolution de la cuve.

En figure 1B est représentée la même machine mais dans laquelle l'ouverture de chargement 2 est prévue dans la partie supérieure de la paroi avec fermeture par un élément approprié 2'.

Le trou 3 rendu hermétique par rapport à la cuve est traversé par un dispositif transporteur 4 et la forme du trou 3 est conformée suivant celle dudit dispositif. Le dispositif transporteur 4 fait saillie à l'extérieur de la cuve et s'étend à l'intérieur de celle-ci sur une relativement grande partie.

Comme dispositif transporteur peut être utilisé un transporteur à vis, tel que vis d'Archimède ou hélice transporteuse, ou un transporteur à courroie. On a représenté au dessin une vis d'Archimède 4 dans sa gouttière 5.

La partie externe de la vis est reliée à un moyen d'entraînement 6 tel qu'un moteur hydraulique à inversion de marche.

La paroi interne de la cuve est pourvue, d'une part, d'une spirale soudée 7 et, d'autre part, de palettes 8.

L'ensemble est avantageusement monté sur chassis semiporté derrière tracteur et au moyen d'un vérin hydraulique monté sur le timon. Pour l'opération de mélange la cuve est inclinée, comme représenté au dessin, et pour la distribution la cuve est remise hydrauliquement de niveau par rapport au sol (voir traits interrompus en 1' figurant la cuve)

Le procédé de mélange et distribution dans la distributrice s'effectue comme suit :

X;

- la cuve inclinée 1 tourne dans le sens de la flèche

- le chargement s'effectue par l'ouverture 2 ;

- la spirale 7 entraîne les aliments vers l'avant de la cuve à l'opposé de l'ouverture 2 ;

- les palettes 8 entraînent les aliments vers le haut pour les laisser retomber sur la vis 4, qui en tournant dans le même sens X que la cuve pousse les aliments vers l'arrière du côté ouverture 2 ;

- le cycle recommence jusqu'à ce que les aliments soient bien mélangés ;

- ensuite, le sens de rotation de la vis 4 est inversé dans la direction Y et les aliments, retombant sur la vis, sont entraînés à l'extérieur de la cuve vers la sortie 9 de la gouttière 5 suivant un rythme très régulier pour être acheminés dans les mangeoires ou bacs par une bande transporteuse ou analogue non représentée.

Dans le but d'obtenir un rendement encore meilleur il est aussi prévu suivant l'invention de faire tourner la vis transporteuse 4 dans le sens Y pour l'opération de mélange, c'est-à-dire dans le sens contraire à la rotation de la cuve, et dans le sens X pour l'opération de distribution.

Dans une machine suivant l'invention le mélange et le déchargement se font par le même dispositif transporteur commandé indépendamment de la cuve.

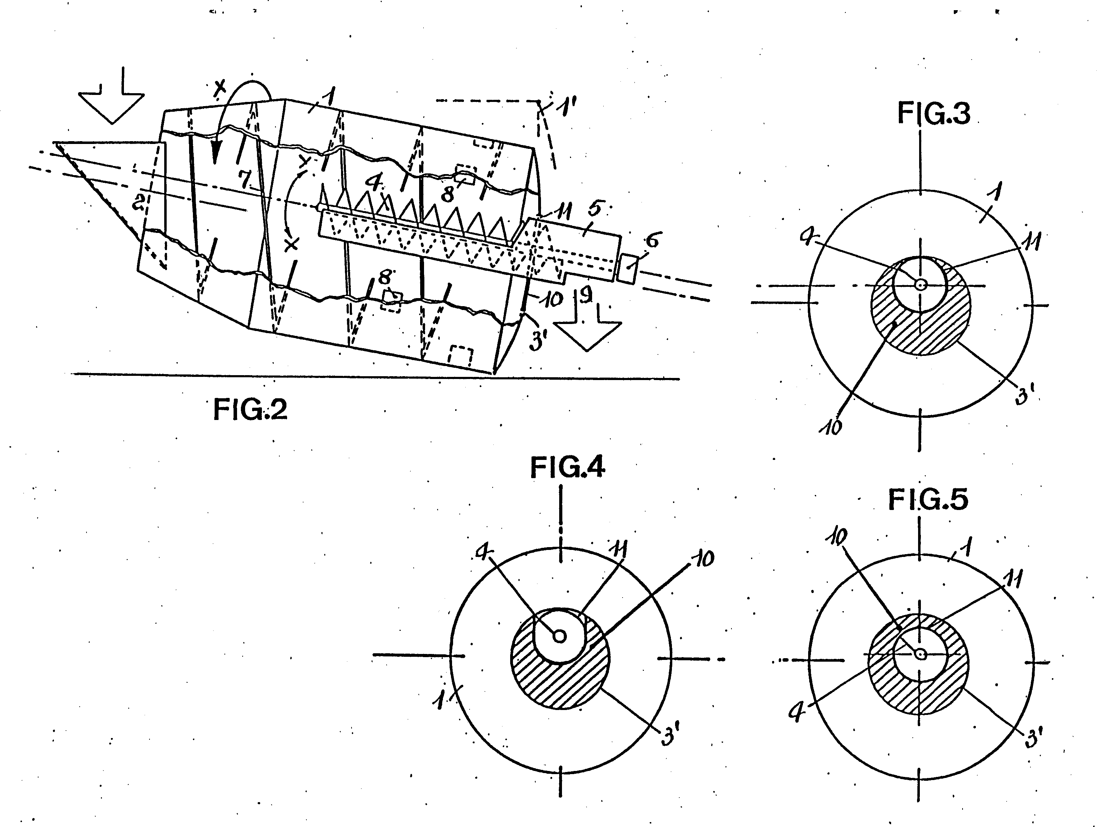

Au lieu que le dispositif transporteur traverse le fond de la cuve suivant l'axe de révolution de celle-ci, il est prévu suivant l'invention de réaliser dans le fond de la cuve un trou 3' de plus grande dimension centré par rapport à l'axe de révolution de la cuve 1, de munir ce trou d'un élément fixe 10 le rendant hermétique par rapport au fond de la cuve et de prévoir dans ledit élément hermétique 10 un trou 11 décentré par rapport à l'axe de révolution de la cuve 1 et traversé par le dispositif transporteur 4 (figure 2).

Dans cette variante le procédé de mélange et distribution s'effectue de la même façon que décrite ci-dessus. Les aliments ne peuvent s'échapper de la cuve par le fond avant, qui est fermé hermétiquement, et ne peuvent être distribués ici aussi que par la sortie 9 du dispositif transporteur.

L'élément fixe hermétique 10 peut être quelconque et le trou décentré 11 disposé dans cet élément 10 suivant diverses réalisations (figures 3 à 5).

Dans la description qui précède ont été utilisés les termes "vers l'avant de la cuve" et "vers l'arrière de la cuve" mais bien entendu ces termes sont indépendants du placement de la cuve sur, par exemple, un châssis semi-porté, la cuve pouvant être montée de manière à réaliser du côté tracteur soit la distribution, soit le chargement.

**Revendications**

1. Procédé de mélange et de distribution d'aliments pour le bétail, caractérisé en ce qu'il consiste à charger les aliments par l'arrière dans une machine rotative suivant son axe de révolution, à amener les aliments vers l'avant de la machine rotative, à ramener ceux-ci par un moyen de transport vers l'arrière de ladite machine pour recommencer le cycle jusqu'au mélange, et ensuite à inverser le sens de marche du moyen de transport pour décharger les aliments mélangés à l'avant de la machine.

2. Procédé suivant la revendication 1, caractérisé en ce qu'il consiste pour l'opération de mélange à incliner la machine rotative vers l'avant et pour l'opération de distribution à la remettre de niveau ou horizontale.

3. Machine mélangeuse-distributrice rotative, destinée à réaliser le procédé suivant l'une quelconque des revendications 1 et 2, caractérisée en ce qu'elle consiste en une cuve (1) animée d'un mouvement de rotation autour d'un axe de révolution horizontal, pourvue d'un trou de chargement (2), et en un dispositif transporteur (4) traversant le fond avant (3) de la cuve rendu hermétique par rapport à ladite cuve pour s'étendre dans une partie importante de celle-ci.

4. Machine suivant la revendication 3, caractérisée en ce que le dispositif transporteur (4) traverse le fond de la cuve (1) par un trou (3) centré par rapport à l'axe de révolution de ladite cuve.

5. Machine suivant la revendication 3, caractérisée en ce que le fond avant de la cuve (1) comporte un trou (3') centré par rapport à l'axe de révolution de ladite cuve et en ce que ce trou (3') est fermé hermétiquement par un élément fixe (10) présentant un trou (11) décentré par rapport à l'axe de révolution de ladite cuve et traversé par le dispositif transporteur (4).

6. Machine suivant la revendication 3, caractérisée en ce que le dispositif transporteur (4) consiste en un transporteur à vis, dont la partie saillant hors de la cuve (1) est reliée à un moyen d'entraînement (6).

7. Machine suivant la revendication 3, caractérisée en ce que le dispositif transporteur (4) consiste en un transporteur à courroie, dont la partie saillant hors de la cuve (1) est reliée à un moyen d'entraînement.

8. Machine suivant l'une quelconque des revendications 6 et 7, caractérisée en ce que le moyen d'entraînement (6) est pourvu d'un système d'inversion de marche mettant le dispositif transporteur (4) en position de mélange ou en position de déchargement.

9. Machine suivant l'une quelconque des revendications 3 à 8, caractérisée en ce que sur la paroi interne de la cuve rotative (1) s'étendent, d'une part, des moyens d'entraînement tels qu'une spirale (7) conformée pour entraîner les aliments par la rotation de la cuve vers le fond avant de celle-ci et, d'autre part, des moyens tels que des palettes (8), entraînant par la rotation de la cuve les aliments vers le haut pour les laisser retomber sur le dispositif transporteur (4), dont le mouvement dans l'opération de mélange les entraîne vers le fond arrière pour recommencer le cycle ou dans l'opération de distribution vers le fond avant et hors de la cuve (1).

10. Machine suivant l'une quelconque des revendications 3 à 9, caractérisée en ce que la cuve (1) est montée sur un vérin hydraulique ou dispositif analogue destiné à l'incliner vers l'avant ou à la redresser horizontalement.

0 276 645

# FIG.1A

# FIG.1B

FIG.2

FIG.3

FIG.4

FIG.5

0 276 645

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 002 645  (FACCIA)<br>* Abrégé; figures 1,2,6,7; page 3, lignes 9-24 * | 1,3,4,6 | A 01 K   5/00<br>A 01 K   5/02 |
| A | | 8,9 | |
| | --- | | |
| A | BE-A-  890 468  (DE CRAMER) | | |
| | --- | | |
| A | GB-A-  362 350  (JAEGER) | | |
| | --- | | |
| A | DE-B-1 219 320  (LANZ) | | |
| | ----- | | |

DOMAINES TECHNIQUES RECHERCHES (Int. Cl.4)

A 01 K
A 23 N

Le présent rapport a été établi pour toutes les revendications

| Lieu de la recherche | Date d'achèvement de la recherche | Examinateur |
|---|---|---|
| LA HAYE | 05-04-1988 | VON ARX V.U. |

EPO FORM 1503 03.82 (P0402)